# EUROPÄISCHE PATENTANMELDUNG

(11) **EP 0 748 677 A1**
(43) Veröffentlichungstag der Anmeldung: **18.12.1996**
(21) Anmeldenummer: 96105018.4
(22) Anmeldetag: 29.03.1996
(51) Int. Cl.: B29C 45/16

(54) **Spritzgiessvorrichtung**

(30) Priorität: 14.06.1995 DE 19521718
(71) Anmelder: Krauss-Maffei Aktiengesellschaft, 80997 München (DE)
(72) Erfinder: Wohlrab, Walter, 91781 Weissenburg (DE)

(57) **Zusammenfassung**

Bei einer Spritzgießvorrichtung zur Herstellung von mehrlagigen Spritzgießteilen aus thermoplastischen Kunststoffmaterialien mit über einen gemeinsamen Düsenkopf (1) von einer ersten Spritzeinheit (2) geleitetem Hautmaterial und von einer zweiten Spritzeinheit (3) geleitetem Kernmaterial ist im Düsenkopf eine Steuereinheit angeordnet, um wahlweise über den Düsenkopf Hautmaterial oder Kernmaterial in eine Formkavität (23) einspritzen zu können. Um den Herstellungs- und Wartungsaufwand für die Steuereinheit im Düsenkopf zu reduzieren wird vorgeschlagen, einen Steuerkolben (7) innerhalb einer im Düsenkopf ausgebildeten Steuerkammer (6) längsverschieblich zu lagern, mit dem, abhängig vom jeweiligen Druck des Haut- oder Kernmaterials die Zufuhr von Haut- oder Kernmaterial über den Düsenkopf steuerbar ist und die Zufuhr des jeweils nicht geförderten Kunststoffmaterials (Haut- oder Kernmaterial) absperrbar ist.

## Beschreibung

Die Erfindung betrifft eine Vorrichtung zum Spritzgießen von mehrlagigen Spritzgießteilen gemäß Oberbegriff des Patentanspruchs 1 sowie ein Verfahren gemäß Oberbegriff des Patentanspruchs 8.

Eine Vorrichtung dieser Art ist aus der DE-PS 22 59 818 bekannt, bei der die Steuereinheit aus hydraulisch betätigbaren Steuerelementen besteht. Neben dem Aufwand für die hydraulische Einrichtung und die hierfür erforderliche Steuerung ergibt sich der Nachteil, daß die im Düsenkopf angeordneten Steuerelemente nach außenhin abgedichtet sein müssen.

Der vorliegenden Erfindung liegt daher die Aufgabe zugrunde, eine Vorrichtung und ein Verfahren zu schaffen, die bei reduziertem Herstellungs- und Wartungsaufwand die Herstellung von mehrlagigen Spritzgießteilen ermöglichen.

Die Erfindung geht dabei von der Erkenntnis aus, daß ein vollständig in einer Steuerkammer des Düsenkopfes eingeschlossener Steuerkolben nur vom Druck der in die Steuerkammer von Spritzeinheiten eingeleiteten thermoplastischen Kunststoffmaterialien gesteuert werden kann.

Weitere Merkmale und Vorteile ergeben sich aus den Unteransprüchen.

Die Erfindung ist hinsichtlich der Vorrichtung anhand eines Ausführungsbeispiels eines Düsenkopfes und hinsichtlich des Verfahrens anhand eines Spritzgießteils in der Zeichnung dargestellt. Es zeigt:
- Fig. 1: einen Halbschnitt eines Düsenkopfes mit einem Steuerkolben, der sich in der oberen Zeichnungshälfte in einer zweiten und in der unteren Zeichnungshälfte in einer ersten Stellposition befindet,
- Fig. 2: einen Halbschnitt durch eine teilweise mit Hautmaterial gefüllte Formkavität einer Spritzgießform,
- Fig. 3: die Formkavität nach Fig. 2 mit zusätzlich zum Hautmaterial eingespritztem Kernmaterial und
- Fig. 4: die Formkavität nach Fig. 3 mit vollständig gefüllter Formkavität.

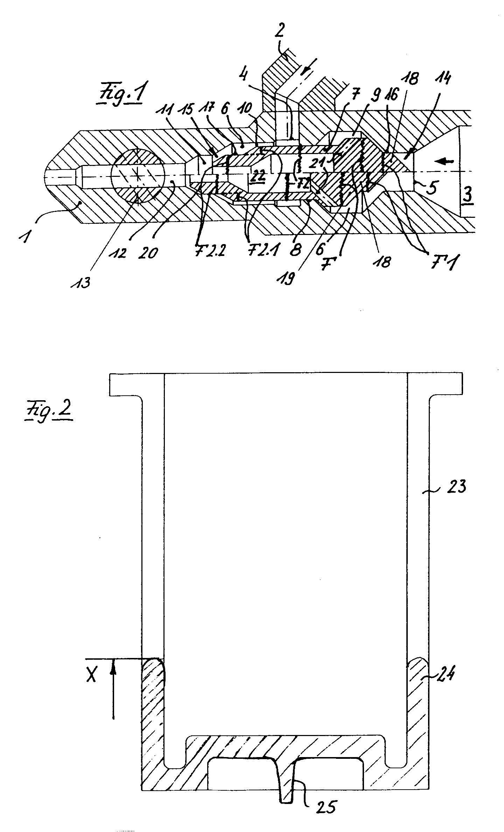

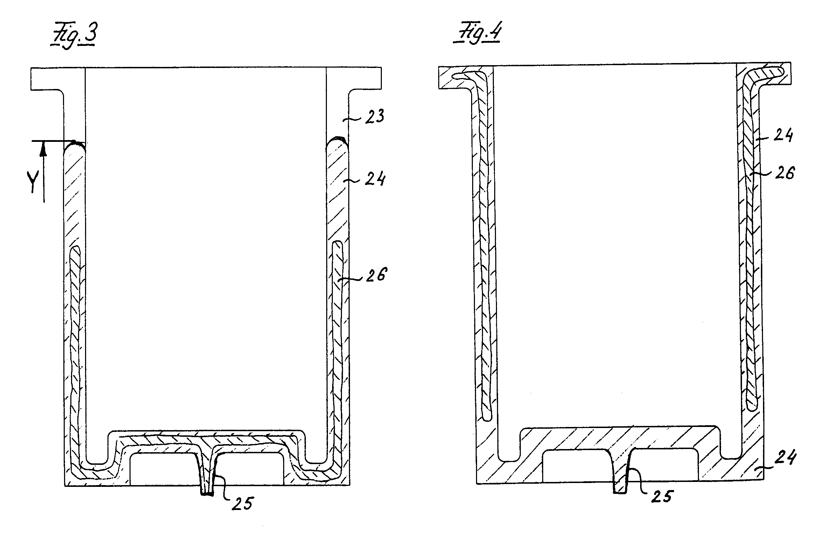

An den in Fig. 1 gezeigten Düsenkopf 1 sind eine erste und eine zweite, nicht näher dargestellte Spritzeinheit 2 und 3 für die Zufuhr von thermoplastischer Kunststoffschmelze aus zwei Einspritz- und Plastifizieraggregaten angeschlossen. Mit der Spritzeinheit 2 ist über eine Eintrittsöffnung 4 thermoplastisches Hautmaterial und mit der Spritzeinheit 3 ist über eine Einspritzöffnung 5 thermoplastisches Kernmaterial in eine Steuerkammer 6 einleitbar, in der ein Steuerkolben 7 in einer zylindrischen Führung 8 längsverschieblich geführt ist. Die zylindrische Führung unterteilt die Steuerkammer 6 in eine erste Teil-Steuerkammer 9 und in eine zweite Teil-Steuerkammer 10. Die Eintrittsöffnung 5 für Kernmaterial mündet in die erste Teil-Steuerkammer 9 und die Eintrittsöffnung 4 für Hautmaterial mündet in die zweite Teil-Steuerkammer 10, in der ferner die zur Formkavität 23 (Fig. 2) führende Austrittsöffnung 11 liegt. Die an die Austrittsöffnung 11 anschließende Leitung 12 im Düsenkopf 1 enthält ein Düsenverschlußventil 13. Der Steuerkolben 7 weist an seinen beiden Enden jeweils ein erstes und ein zweites Verschlußdüsenelement 14 und 15 auf. Das erste Verschlußdüsenelement 14 hat ein zylindrisches Verschlußteil 16 ausgebildet, daß unter Verschlußwirkung in die entsprechend zylindrisch ausgebildete Eintrittsöffnung 5 einführbar ist. In gleicher Weise hat das zweite Verschlußdüsenelement 15 ein zylindrisches Verschlußteil 17 ausgebildet, daß unter Verschlußwirkung für Hautmaterial in die entspre- chend zylindrisch ausgebildete Austrittsöffnung 11 einführbar ist. Die Längserstreckung des zylindrischen Verschlußteils 17 ist größer als die des zylindrischen Verschlußteils 16.

Das zylindrische Verschlußteil 16 repräsentiert ein erstes Nebenkolbenteil 18 mit einer Kolbenfläche F1. In der ersten Teil-Steuerkammer 9 liegt das Hauptkolbenteil 19 mit einer Kolbenfläche F. Das zylindrische Verschlußteil 17 hat eine Kolbenfläche F2.2, die zusammen mit der Ringkolbenfläche F2.1 ein zweites Nebenkolbenteil 20 mit der Kolbenfläche F2 darstellt.

Im Hauptkolbenteil 19 sind ein oder mehrere Durchgangskanäle 21 angeordnet, die die erste Teil-Steuerkammer 9 über einen im Steuerkolben 7 ausgebildeten Hohlraum 22 mit der zweiten Teil-Steuerkammer 10 bzw. mit der Austrittsöffnung 11 verbinden.

Im folgenden wird die Betriebsweise anhand der in den Fig. 3 bis 4 dargestellten Produktionsphasen eines Spritzgießteils erläutert, daß eine Mülltonne darstellt, die aus einem geringerwertigem Kernmaterial besteht, daß mit höherwertigem Hautmaterial umhüllt ist.

Die in Fig. 2 dargestellte Formkavität 23 wird in einem ersten Arbeitsschritt zunächst teilweise (Füllstand x) mit Hautmaterial 24 gefüllt. Hierzu wird von einer ersten Stellposition des Steuerkolbens 7 ausgegangen, wie sie in der unteren Zeichnungshälfte von Fig. 1 dargestellt ist. Durch Druckerhöhung in der ersten Spritzeinheit 2 und entsprechende Drucklosschaltung oder Druckreduzierung in der zweiten Spritzeinheit 3 wirkt der Druck des in der zweiten Teil-Steuerkammer 10 befindlichen Hautmaterials 24 auf die Ringkolbenfläche F2.1 und veranlaßt den Steuerkolben 7 sich nach rechts zu bewegen, bis dieser die in der oberen Zeichnungshälfte von Fig. 1 dargestellte zweite Stellposition eingenommen hat. In dieser Stellposition wird von der ersten Spritzeinheit 2 gefördertes Hautmaterial in freier Passage von der zweiten Teil-Steuerkammer 10 über die Austrittsöffnung 11, die Leitung 12 und den Anguß 25 (Fig. 2-4) in die Formkavität 23 geleitet, bis die Füllstandshöhe x erreicht ist. Da die Längserstreckung des zylindrischen Verschlußteils 17 größer ist als die des zylindrischen Verschlußteils 16 ist sichergestellt, daß vor der Förderung von Hautmaterial die Zufuhr von Kernmaterial abgesperrt ist.

In dem daran anschließenden zweiten Arbeitsschritt wird der Druck der ersten Spritzeinheit 2 reduziert oder auf Null geregelt, wobei gleichzeitig der Druck in der zweiten Spritzeinheit 3 erhöht wird. Der Druck des in der zweiten Spritzeinheit 3 geförderten Kernmaterials wirkt zunächst auf die Kolbenfläche F1 und veranlaßt den Steuerkolben 7 sich aus der zweiten Stellposition (gemäß oberer Zeichnungshälfte) nach links in die erste Stellposition zu begeben. Nach dem Heraustreten des zylin drischen Verschlußteils 16 aus der Eintrittsöffnung 5 kann sich der Druck des Kernmaterials auch auf die gesamte Kolbenfläche F des Hauptkolbenteils 19 entfalten und bewirkt so einen sicheren Verschluß der ersten Teil-Steuerkammer 9 gegenüber der zweiten Teil-Steuerkammer 10. Mit dem mit der ersten Stellposition einhergehenden Eintreten des zweiten zylindrischen Verschlußteils 17 in die Austrittsöffnung 11 wird ferner sichergestellt, daß aus der zweiten Teil-Steuerkammer 10 kein Hautmaterial über die Austrittsöffnung 11 in die Formkavität 23 gelangen kann. In dieser ersten Stellposition gelangt das von der zweiten Spritzeinheit 3 unter Druck geförderte Kernmaterial in freier Passage von der Eintrittsöffnung 5 über die erste Teil-Steuerkammer 9, die Durchgangskanäle 21, den Hohlraum 22, die Leitung 12 und den Anguß 25 in die Formkavität 23 und schiebt sich als Kern 26 (Fig. 3,4) in das vorhandene Hautmaterial 24. Die Zufuhr vom Kernmaterial wird fortgesetzt bis die Füllstandshöhe Y (Fig. 3) erreicht ist.

In dem anschließenden dritten Arbeitsschritt, der dem ersten Arbeitsschritt entspricht, wird wieder Hautmaterial 24 in die Formkavität 23 eingespritzt bis diese vollständig gefüllt ist. Wie aus Fig. 4 zu ersehen, besteht das fertige Spritzgießteil aus einem Kern 26, der vollständig von Hautmaterial 24 umhüllt ist.

## Patentansprüche

1. Spritzgießvorrichtung zur Herstellung von mehrlagigen Spritzgießteilen aus thermoplastischen Kunststoffmaterialien mit über einen gemeinsamen Düsenkopf von einer ersten Spritzeinheit geleitetem Hautmaterial und von einer zweiten Spritzeinheit geleitetem Kernmaterial, wobei im Düsenkopf eine Steuereinheit zum wahlweisen Eindüsen von Haut- oder Kernmaterial angeordnet ist, **dadurch gekennzeichnet,** daß die Steuereinheit aus einem Steuerkolben (7) besteht, der innerhalb einer im Düsenkopf (1) ausgebildeten Steuerkammer (6,9,10) längsverschieblich gelagert ist, mit dem, abhängig vom jeweiligen Druck des Haut- oder Kernmaterials, die Zufuhr von Haut- oder Kernmaterial über den Düsenkopf (1) steuerbar ist und die Zufuhr des jeweils nicht geförderten Kunststoffmaterials (Haut- oder Kernmaterial) absperrbar ist.

2. Spritzgießvorrichtung nach Anspruch 1, **dadurch gekennzeichnet,** daß der Steuerkolben (7) an seinen beiden Enden ein erstes und ein zweites Verschlußdüsenelement (14,15) aufweist, wobei mit dem ersten Verschlußdüsenelement (14) die in die Steuerkammer (6,9) mündende Eintrittsöffnung (5) für das Kernmaterial und mit dem zweiten Verschlußdüsenelement (15) die aus der Steuerkammer (6,9) führende Austrittsöffnung (11) verschließbar ist, der Steuerkolben (7) zwischen den Verschlußdüsenelementen (14,15) ein mit Durchgangskanälen (21) versehenes Hauptkolbenteil (19; Kolbenfläche F), im Bereich des ersten Verschlußdüsenelements (14) ein erstes Nebenkolbenteil (18; Kolbenfläche F1) und im Bereich des zweiten Verschlußdüsenelements (15) ein zweites Nebenkolbenteil (20; Kolbenfläche F2) aufweist, die Eintrittsöffnung (4) für das Hautmaterial in der der Eintrittsöffnung (5) für das Kernmaterial abgewandten Seite des Hauptkolbenteils (19) in die Steuerkammer (6,10) mündet.

3. Spritzgießvorrichtung nach Anspruch 2, **dadurch gekennzeichnet,** daß sich das Nebenkolbenteil (20, F2) aus einer Kreiskolbenfläche F2.2 und einer Ringkolbenfläche F2.1 zusammensetzt.

4. Spritzgießvorrichtung nach Anspruch 2 oder 3, **dadurch gekennzeichnet,** daß das erste Verschlußdüsenelement (14) ein in die Eintrittsöffnung (5) unter Verschlußwirkung einfuhrbares erstes zylindrisches Verschlußteil (16) aufweist, dessen axiale Erstreckung geringer ist als die axiale Erstreckung des zweiten zylindrischen Verschlußteils (17), das in die Austrittsöffnung (11) unter Verschlußwirkung einführbar ist.

5. Spritzgießvorrichtung nach einem der Ansprüche 2 bis 4, **dadurch gekennzeichnet,** daß die Durchgangskanäle (21) in einen Hohlraum (22) münden, der im Steuerkolben (7) auf der der Eintrittsöffnung (5) abgewandten Seite des Hauptkolbenteils (19) ausgebildet ist und der zur Austrittsöffnung (11) stets geöffnet ist.

6. Spritzgießvorrichtung nach einem der Ansprüche 2 bis 5, **dadurch gekennzeichnet,** daß das Hauptkolbenteil (19) beidseitig Kegelflächen aufweist, die in den beiden Schaltstellungen des Steuerkolbens (7) jeweils mit entsprechend ausgebildeten Kegelflächen in der Steuerkammer (6,9) zur Auflage kommen.

7. Spritzgießvorrichtung nach einem der Ansprüche 2 bis 6, **dadurch gekennzeichnet,** daß die Steuerkammer (6) in eine erste und in eine zweite Teil-Steuerkammer (9,10) unterteilt ist, wobei in der ersten Teil-Steuerkammer (9) das Hauptkolbenteil (19) und die Eintrittsöffnung (5) für das Kernmaterial liegt, und die erste und die zweite Teil-Steuerkammer (9,10) durch eine zylindrische Führung (8) des Steuerkolbens (7) im Düsenkopf (1) voneinander getrennt sind.

8. Verfahren zur Herstellung eines mehrlagigen Spritzgießteils mit einer Spritzgießvorrichtung nach einem der vorangegangenen Ansprüche 1 bis 7, **dadurch gekennzeichnet,** daß in einem ersten Arbeitsschritt zunächst der Druck in der ersten, das Hautmaterial führenden Spritzeinheit (2) gegenüber der druckreduziert oder drucklos geschalteten zweiten, das Kernmaterial führenden zweiten Spritzeinheit (3) erhöht wird, worauf der Steuerkolben (7) die Zufuhr von Kernmaterial über den Düsenkopf (1) absperrt, und das Hautmaterial über den Düsenkopf (1) in die Formkavität (23) leitet, bis diese mit einer Hautmaterialmenge (Füllstand x) gefüllt ist, die zur Hautmaterialummantelung des größeren Teils des fertigen Spritzgießteils ausreicht, worauf in einem zweiten Arbeitsschritt der Druck in der zweiten Spritzeinheit (3) gegenüber der druckreduziert oder drucklos geschalteten ersten Spritzeinheit (2) erhöht wird, der eine Verschiebung des Steuerkolbens (7) in eine die Zufuhr von Hautmaterial über den Düsenkopf (1) absperrende und eine die Zufuhr von Kernmaterial in die Formkavität (23) öffnende Stellung zur Folge hat, wobei soviel Kernmaterial eingespritzt wird, daß die im ersten Arbeitsschritt in die Formkavität eingespritzte Menge an Hautmatertial zur vollständigen Umhüllung des Kernmaterials ausreicht und worauf in einem dritten Arbeitsschritt, der dem ersten Arbeitsschritt entspricht, Hautmaterial zur abschließenden und vollständigen Umhüllung des Spritzgießteils eingespritzt wird.
